Europäisches Patentamt

**European Patent Office**

**Office européen des brevets**

(11) Publication number: **0 333 340**
A1

## (12) EUROPEAN PATENT APPLICATION

(21) Application number: **89301831.7**

(22) Date of filing: **06.03.89**

(51) Int. Cl.4: **H04Q 11/04 , H04J 3/06**

(30) Priority: **16.03.88 GB 8806591**

(43) Date of publication of application:
**20.09.89 Bulletin 89/38**

(84) Designated Contracting States:
**BE DE ES FR GB IT SE**

(71) Applicant: **STC PLC**
**10, Maltravers Street**
**London, WC2R 3HA(GB)**

(72) Inventor: **Aknai, Peter**
**117, Hazeldell Watton at Stone**
**Hertford Hertfordshire, SG14 3SP(GB)**

(74) Representative: **Dupuy, Susan Mary et al**
**STC Patents West Road**
**Harlow Essex CM20 2SH(GB)**

(54) **Multiplexer.**

(57) A telecommunication system which includes a cabinet unit remote from the exchange and serving a number of subscribers and coupled via an optical fibre line to a similar exchange unit. The exchange unit and cabinet unit are based on multiplexers such as of the type described in the British Patent Specification No. 2185658A and No. 2185659A.

EP 0 333 340 A1

## MULTIPLEXER

This invention relates to a telecommunication system in which subscribers are connected to local multiplexing units which are coupled to an automatic telecommunication exchange. Such a system resembles known systems in which digital concentrators are used. An example of such a system is disclosed in British Patent Specification No. 2085264A (Western Electric Company), to which corresponds US Patents No. 4398284 (Canniff), No. 4403320 (Canniff) and No. 4357701 (Canniff).

According to one aspect of the present invention there is provided an automatic telecommunication system which includes a customer unit remote from an automatic telecommunication exchange and connected thereto in time division multiplex (TDM) manner via a physical transmission medium, wherein the customer unit includes one or more multiplexers each serving a number of subscriber lines, which multiplexer or multiplexers are coupled to the exchange in TDM manner over the transmission medium, and wherein the exchange to which the medium is coupled includes an exchange unit which is similar to the customer unit and couples the medium to inlets to and outlets from the exchange.

According to another aspect of the present invention there is provided an automatic telecommunications system, which includes a customer unit remote from an automatic telecommunications exchange and connected to an exchange unit at said exchange via a physical transmission medium over which transmission is affected digitally, wherein the customer unit includes a plurality of multiplexers each serving a number of subscriber lines, wherein the exchange unit includes a corresponding plurality of multiplexers each serving a number of inlets to the exchange which corresponds to the lines served by one of said customer unit multiplexers, wherein each said multiplexer provides multiplexing and de-multiplexing with analogue/digital and digital/analogue configuration for its said lines or inlets, and where the transmission over the medium is effected in a super-multiplex manner so that intelligence from all of said multiplexer is conveyed over the same medium.

According to a further aspect of the present invention there is provided an automatic telecommunication system, which includes an exchange unit at an automatic telecommunication exchange and customer unit remote from the exchange and connected thereto in time division multiplex (TDM) manner via a physical transmission medium, intelligence being conveyed over the medium using pulse code modulation (PCM), wherein the customer unit includes a plurality of multiplexers each serving a number of subscriber lines, with analogue/digital and digital/analogue conversion as required by the line wherein the multiplexers are coupled to the medium in super-multiplexed manner, wherein at the exchange unit the incoming super-multiplexed bit stream is de-multiplexed to the lower level multiplexes appropriate to the multiplexers in the exchange unit and in the customer unit connected thereto over the medium are equal, wherein the multiplexers at the exchange unit provides digital/analogue and analogue/digital conversion between the multiplexed bit streams and a number of inlets to the exchange, there being a said inlet to the exchange from the exchange unit for each one of the lines served by the customer unit coupled to that exchange unit,and wherein transmission from the exchange unit to the customer unit and thus to the lines served thereby is effected in a manner similar to that used for transmission from the customer unit to the exchange unit.

In a system such as set out in the proceeding paragraphs, the time slot channels used in the transmission medium are always available to the subscribers so that there is no blocking. This is not so in concentrator systems such as the one referred to above.

The multiplexers used in the system to be described are of the type described and claimed in our British Patent Specifications No. 2185658A (D B Waters et al 6-3X) and No. 2185659A (M J Section 5). Such multiplexers are identified by our Registered Trade Mark PDMX.

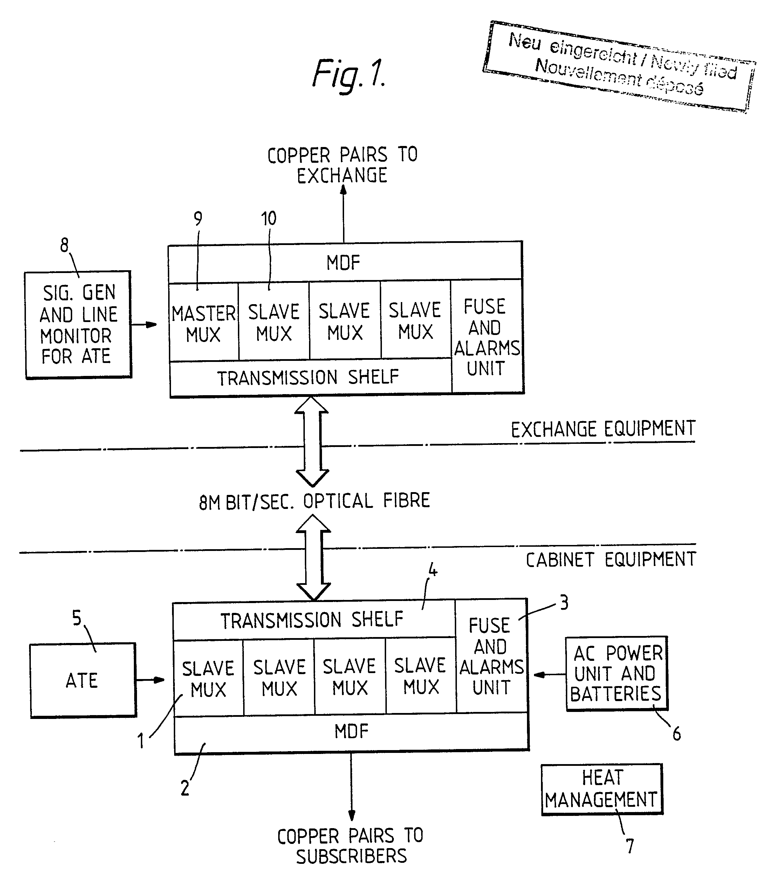

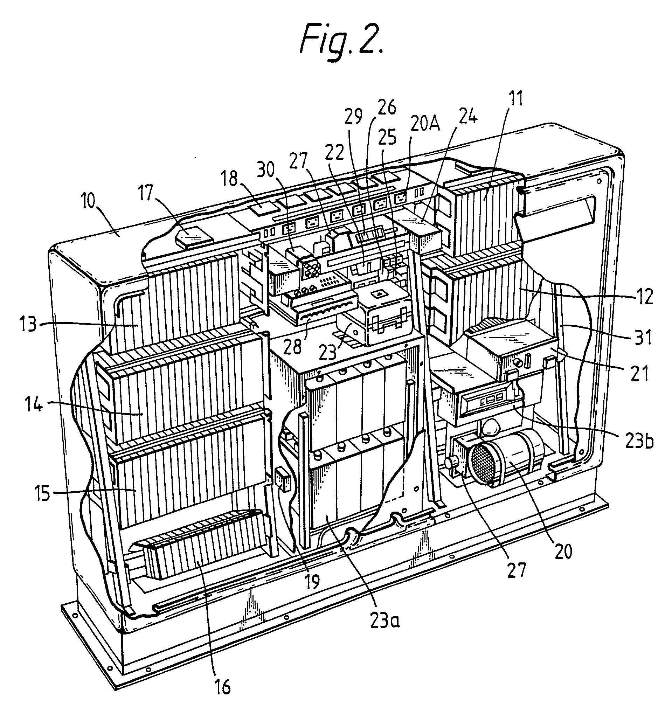

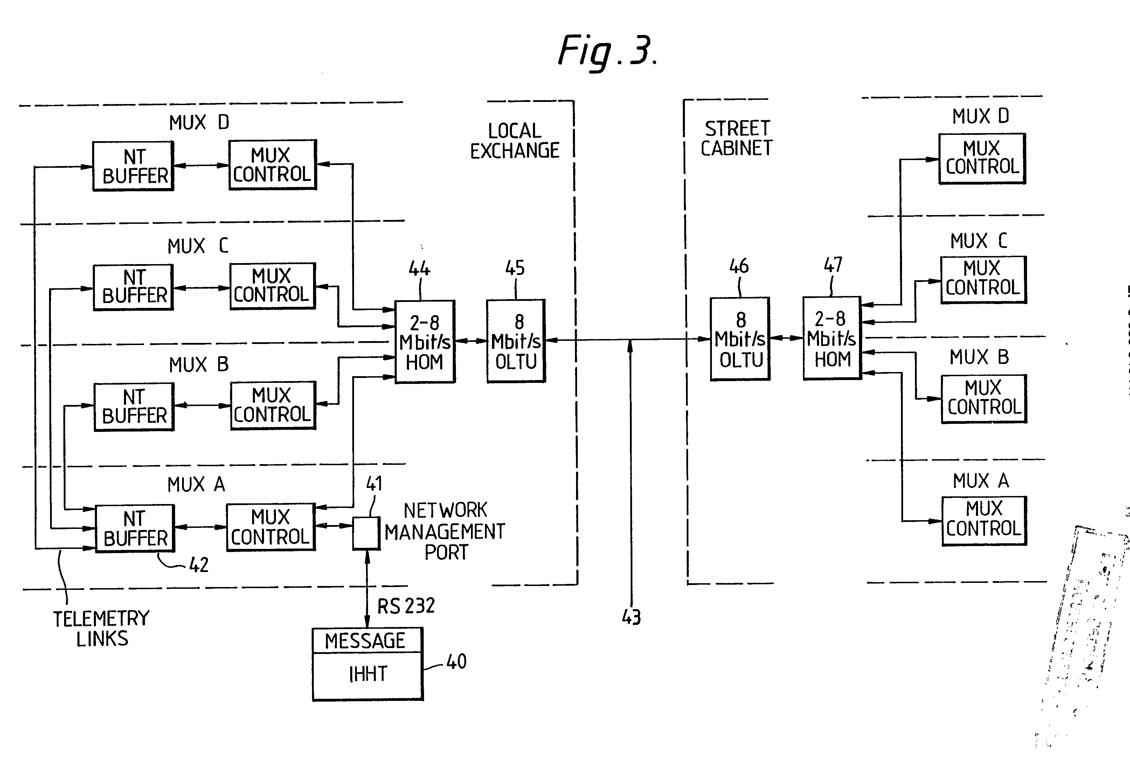

An embodiment of the invention will now be described with reference to the accompanying drawings, in which Fig. 1 is a highly schematic representation of the system. Fig. 2 is a view, partly cut-away of a customer unit such as used in the system of Fig. 1, and Fig. 3 is an explanatory diagram relating to the setting up of the system.

Referring to Fig. 1, we first consider the customer unit, referred to in Fig. 1 as cabinet equipment. This includes four multiplexers, such as 1, referred to as slave muxes, to which copper pairs from telephone subscribers are connected via a small main distributing frame (MDF) 2. Also connected to the MDF are a fuse and alarm unit 3 and a transmission shelf 4. As will be appreciated this embodiment is concerned with narrow band telephony and copper links from the subscriber to the cabinet equipment.

The link to the exchange is an 8Mb/sec. optical fibre link, and the shelf 4 multiplexes the slave multiplexer's outputs on to the fibre link, using higher order multiplexers (HOMs). The actual connections to the optical fibre link uses an optical line transmission unit (OLTU). Each of the multiplexers such as 1 has a single 2Mb/sec. input/output trunk, and the four such trunks are multiplexed on to, and de-multiplexed off, the 8Mb/sec. fibre link, using the HOM's and OLTU's referred to above. These multiplexers such as 1 all function under the control of the equipment at the exchange. Hence they are all slaves, which (as will be seen) is not the case for the multiplexers used in the exchange equipment.

Associated with the items just described we have automatic tone-back equipment (ATE) 5, an AC power unit and batteries 6 and heat management equipment 7. ATE is used for test purposes, as will be seen below. The power unit 6 is driven from the public electricity supply but includes batteries maintained on trickle charge which can take over and maintain operations for several hours if the mains fails. The heat management equipment 7 includes heaters for use in cold weather and such cooling equipment as is needed for heat dissipation.

The exchange equipment is generally similar, but is powered from the normal exchange supply and so does not need its own equipment corresponding to the units 6 and 7. The block 8 includes signal generation and line monitoring equipment for testing the cabinet equipment. This it does by sending suitable signals to the cabinet equipment, the response to these signals being monitored.

One point in which the exchange equipment differs from the cabinet equipment is that one of its multiplexers, 9, is a master multiplexer, the others such as 10 being slave multiplexers. Control of both the exchange and the cabinet equipment shown is exercised via this master mux, under control of the exchanges' control equipment. Note that the cabinet equipment is also known as a customer equipment. Although three of the multiplexers in the exchange equipment are referred to as slaves, they are 'as seen' by the cabinet or customer equipment in effect master multiplexer.

Thus it will be seen that the system allows subscribers' local loops to be connected to and from a public switched telephone network (PSTN), using multiplexers and digital optical fibre transmission techniques. Note that there is no storage of the intelligence to be conveyed in this system.

The system accepts mixed traffic signals, audio, loop and earth signalling, to support the following services:-

    a) direct analogue exchange line
    b) loop calling PABX
    c) earth calling PABX

To support these services, channel associated signalling (CAS) is used between the multiplexers, which are 30 channel multiplexers in the local cabinet and at the local exchange. Each such cabinet thus supports 120 channels. The 8Mb/sec. optical links are duplicated in the interests of security. In the arrangement described herein, the capacity is, as described above, 120 channels, but up to 160 subscribers' lines may be connected to the cabinet equipment. 120 of these are chosen to be connected back to the exchange. This is called 'over equipping' and is under control of the network management equipment at the exchanges. It corresponds to the co-called cable taper which currently occurs at the cabinet in the 'copper' network.

With the present system, each TDM channel is permanently attached to one of the subscriber lines served by the cabinet or customer equipment. Hence there is no blocking caused by the equipment shown in Fig. 1. This is a major difference between our system and concentrator systems.

The automatic tone-back equipment (ATE) is used for testing by sending a tone from the block 8 via a multiplexer in the exchange unit, the fibre link and the customer unit to a subscriber line. This tone is then sent back to the exchange unit where it is compared with what was originally sent for test purposes.

In slightly more detail, the automatic tone-back equipment (ATE) tests the audio channel between the exchange and the multiplexers at the customer end, as well as the transmission equipment between them. When a line is to be tested, the ATE is connected to an assigned line at the remote multiplexer with test access units included in the multiplexer. The testing is governed by signal generating and monitoring equipment in the exchange. The provision of test access at the exchange end enables the same circuit to be accessed and end-to-end connections checks to be carried out.

A tone signal, in this case 2700 Hz, sent from the exchange energises a relay in the ATE 5 for the line to be tested, and this relay disconnects the subscriber line and applies an 800 Hz tone-back signal to the two-wire connectors. This enables line-loss transmission measurements to be effected. A second 2700 Hz command tone sent down the line drops the relay and thus restores the subscriber circuit and inhibits the 800 Hz tone-back signal. As an alternative the ATE may be operated on a timed basis, with the customer connections restored and the tone-back signal inhibited after a fixed time-out period such as 60 seconds. If needed, the subscriber circuit may also be manually isolated by a 'break-link'.

We now refer to Fig. 2, in which we see a moulded cabinet 10 which is street-located, or in the case of a large subscriber at or near his premises, but outside his buildings(s). This cabinet contains four multiplexers 11, 12, 13, 14, the transmission shelf 15 and the MDF 16. For combined cooling and heat management there are internal cooling fans 17 and fan controllers 18, a thermostat 19, and a heater unit 20. There are also fan monitors 20A, which react to any failure of the fans to disconnect power to avoid trouble due to overheating.

The power unit has an AC/DC converter unit 21 and a DC-DC converter 22, since several different voltages are needed and a low voltage disconnect unit 23. In addition there are batteries 23A, and a consumer unit 23B for control and supervisory purposes. There is also a -50 volt socket 24 for use when the equipment is to be externally powered from, for instance an exchange battery, and -50 volt circuit breakers 25.

The ATE equipment can be seen at 26.

There are also gas detectors 27 and gas monitor 28 which respond if the cabinet is subject to unwelcome gas troubles. Finally there are a fuse panel and a rack alarm unit 30.

The cabinet is 2.00 metres long, by 1.2 metres high and 40 cm deep. Note its supporting framework indicated at 31.

We now consider with reference to Fig. 3, the setting up operations for the multiplexers, which uses the principles involved in setting up the multiplexers of the type detailed in the above mentioned British Patent Specification Nos. 2185658A and 2185659A. Each of these multiplexers has a number of plug-in units which include its mux control unit, the latter including a microprocessor, a number of other plug-in units each of which served a block of subscriber lines, and a network telemetry (NT) buffer unit. The NT buffers co-operate to perform the so-called framekeeping functions for equipment using the multiplexer. These convey signalling and other messages at relatively slow digital rates, e.g. 4 Kb/sec., compared with the PCM-TDM bit rates.

The setting up procedure uses an intelligent hard held terminal (IHHT) 40 connected via an RS232 data link to a network management port 41 which forms part of multiplexer A of the exchange equipment.

This is the multiplexer referred to in Fig. 1 in the master. It's NT buffer 42 communicates as shown via telemetry links to the other multiplexers in the exchange equipment. The messages to be sent from the IHHT 40 notify which time slots in which multiplexers are to be allocated to which of the subscriber lines served.

The output from the four mux controls at the exchange end are multiplexed on to the fibre link 43 via a 2-8 Mbit/sec. HOM 44 and an 8 Mbit/sec. OLTU 45.

At the street cabinet, the messages are received via another 8 Mb/sec. OLTU 46 and another HOM 47 from which they are offered to the multiplex controls.

It will be recalled that the multiplexer at the exchange end each corresponds to a multiplexer at the street cabinet end and that the inlets to the exchange from the multiplexer each corresponds to a line served, thus each configuration message is accepted at the exchange end by the appropriate one of the exchange end multiplexer. This sets that multiplexer up. In addition each such message is passed by its exchange end multiplexer control to the other end where it is offered to all multiplexers. At this cabinet end, each message is accepted by the multiplexer to which it is appropriate, and causes the time slot allocation called for by that message to be effected.

Thus the equipment is configured, under IHHT control, so that each line served is allocated its own time slot.

## Claims

1. An automatic telecommunication system characterised in that it includes a customer unit remote from an automatic telecommunication exchange and connected thereto in time division multiplex (TDM) manner via a physical transmission medium, wherein the customer unit includes one or more multiplexers each serving a number of subscriber lines, which multiplexer or multiplexers are coupled to the exchange in TDM manner over the transmission medium, and wherein the exchange to which the medium is coupled includes an exchange unit which is similar to the customer unit and couples the medium to inlets to and outlets from the exchange.

2. A system as claimed in claim 1, wherein the multiplexers at the customer unit are all slave multiplexers slaved to the exchange unit, and wherein the exchange unit includes a master multiplexer controlled from the exchange and a plurality of slave multiplexers slaved to the master multiplexer.

3. A system as claimed in claim 1 or 2, wherein the subscriber lines served by the said customer unit are connected thereto via a distribution frame in the customer unit.

4. A system as claimed in claims 1, 2 or 3, wherein at the exchange unit the inlets to the exchange are connected to the multiplexers of said exchange unit via a distribution frame in the customer unit.

5. A system as claimed in claims 1, 2, 3 or 4, wherein the transmission medium is an optical fibre link.

6. A system as claimed in claims 1, 2, 3, 4 or 5, wherein the customer unit and the exchange unit each includes four multiplexers, wherein each said multiplexer has a 2 Mb/sec. trunk as its high bit rate end, and wherein the physical transmission medium is an 8 Mb/sec. trunk.

7. An automatic telecommunication system, characterised in that it includes a customer unit remote from an automatic telecommunication exchange and connected to an exchange unit at said exchange via a physical transmission medium over which transmission is effected digitally, wherein the customer unit includes a plurality of multiplexers each serving a number of subscriber lines, wherein the exchange unit includes a corresponding plurality of multiplexers each serving a number of inlets to the exchange which correspond to the lines served by one of said customer unit multiplexers, wherein each said multiplexer provides multiplexing and de-multiplexing with analogue/digital and digital/analogue configuration for its said lines or inlets, and where the transmission over the medium is effected in a super-multiplex manner so that intelligence from all of said multiplexer is conveyed over the same medium.

8. An automatic telecommunication system, characterised in that it includes an exchange unit at an automatic telecommunication exchange and a customer unit remote from the exchange and connected thereto in time division multiplex (TDM) manner via a physical transmission medium, intelligence being conveyed over the medium using pulse code modulation (PCM), wherein the customer unit includes a plurality of multiplexers each serving a number of subscriber lines, with analogue/digital and digital/analogue conversion as required by the line wherein the multiplexers are ·coupled to the medium in super-multiplexed manner, wherein at the exchange unit the incoming super-multiplexed bit stream is de-multiplexed to the lower level multiplexes appropriate to the multiplexers in said exchange unit, wherein the number of multiplexers in the exchange unit and in the customer unit connected thereto over the medium are equal, wherein the multiplexers at the exchange unit provides digital/analogue and analogue/digital conversion between the multiplexed bit steams and a number of inlets to the exchange, there being a said inlet to the exchange from the exchange unit for each one of the lines served by the customer unit coupled to that exchange unit, and wherein transmission from the exchange unit to the customer unit and thus to the lines served thereby is effected in a manner similar to that used for transmission from the customer unit to the exchange unit.

9. A system as claimed in claim 7, wherein the multiplexers at the customer unit are all slave multiplexers slaved to the exchange unit, wherein at the exchange unit one of the multiplexers is a master multiplexer and the other a slave multiplexer, and wherein control is exercised from the exchange via the master multiplexer in the exchange unit.

10. A system as claimed in claim 7, and which includes automatic test equipment at the exchange, wherein to test a subscribers line connected to a said multiplexer at a customer unit the test equipment transmits a tone signal in the time slot on the super-multiplex appropriate to the line to be tested, wherein at the customer unit the tone signal is applied to the line to be tested, whereafter it is sent back to the exchange unit, and wherein the tone signal thus sent back to the exchange unit is compared with what was sent, the result of said comparison indicating the condition of the tested line.

11. A system as claimed in claim 7, and wherein the exchange has a number of exchange units each connected over its own physical transmission medium to remote customer unit.

12. A system as claimed in claim 7, wherein the subscriber lines served by a said customer unit are connected thereto via a distribution frame in the customer unit.

13. A system as claimed in claim 8, wherein at the exchange unit the inlets to the exchange are connected to the multiplexers of said exchange unit via a distribution frame in the customer unit.

14. A system as claimed in claim 8, wherein the transmission medium is an optical fibre link.

15. A system as claimed in claim 8, wherein the customer unit and the exchange each includes four multiplexers, wherein each said multiplexer has a 2 Mb/sec. trunk as its high bit rate end, and wherein the physical transmission medium is an 8 Mb/sec. trunk.

16. A system as claimed in claim 15, wherein the exchange has a number of exchange units each connected over its own medium to remote customer units.

# Fig.1.

COPPER PAIRS TO
EXCHANGE

8

SIG. GEN
AND LINE
MONITOR
FOR ATE

9  10

MDF

MASTER MUX | SLAVE MUX | SLAVE MUX | SLAVE MUX | FUSE AND ALARMS UNIT

TRANSMISSION SHELF

EXCHANGE EQUIPMENT

8M BIT/SEC. OPTICAL FIBRE

CABINET EQUIPMENT

4

3

5

ATE

TRANSMISSION SHELF

SLAVE MUX | SLAVE MUX | SLAVE MUX | SLAVE MUX | FUSE AND ALARMS UNIT

AC POWER
UNIT AND
BATTERIES

MDF

6

1

2

HEAT
MANAGEMENT

7

COPPER PAIRS TO
SUBSCRIBERS

# Fig. 2.

Fig. 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 151 454  (STANDARD ELEKTRIK) * Page 3, line 22 - page 4, line 28; page 7, line 24 - page 8, line 14 * | 1,5 | H 04 Q  11/04 H 04 J  3/06 |
| Y | | 2,4 | |
| A | | 6 | |
| X | EP-A-0 094 096  (SIEMENS) * Page 3, line 28 - page 4, line 6; page 5, line 13 - page 6, line 30 * | 7 | |
| Y | | 8-11,13 ,14 | |
| A | | 15-17 | |
| D,Y | GB-A-2 085 264  (WESTERN ELECTRIC) * Page 3, lines 24-35; page 22, line 34 - page 23, line 1 * | 2,9 | |
| Y | TELCOM REPORT, 1981, Suppl., "Digital Vermittlungssystem EWSD", pages 19-27, Munich, DE; R. BORGER et al.: "Periphere Anschlussgruppen im System EWSD" * Page 20, middle column, line 4 - page 21, line 32; page 23, left-hand column, lines 1-27; page 24, left-hand column, line 22 - middle column, line 14 * | 3,4,8, 10,11, 13,14 | TECHNICAL FIELDS SEARCHED (Int. Cl.4)  H 04 Q H 04 M H 04 J |
| Y | FR-A-2 247 858  (IBM) * Page 2, lines 1-31; page 4, lines 11-40; figure 1 *         -/- | 10 | |

The present search report has been drawn up for all claims

| Place of search | Date of completion of the search | Examiner |
|---|---|---|
| THE HAGUE | 25-05-1989 | VAN DEN BERG,J.G.J. |

EPO FORM 1503 03.82 (P0401)

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | INTERNATIONAL CONFERENCE ON COMPUTERS COMMUNICATION, 12th-14th August 1974, pages 525-533, Stockholm, SE; H. FICK: "Structures and operating principles of network for data traffic" * Page 529, left-hand column, line 44 - right-hand column, line 45 * | 2,9 | |

TECHNICAL FIELDS
SEARCHED (Int. Cl.4)

The present search report has been drawn up for all claims

| Place of search | Date of completion of the search | Examiner |
|---|---|---|
| THE HAGUE | 25-05-1989 | VAN DEN BERG, J.G.J. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 
& : member of the same patent family, corresponding
   document

EPO FORM 1503 03.82 (P0401)